Europäisches Patentamt

European Patent Office

Office européen des brevets

(11) Veröffentlichungsnummer: **0 027 245**
**A1**

(12) **EUROPÄISCHE PATENTANMELDUNG**

(21) Anmeldenummer: **80106076.5**

(22) Anmeldetag: **07.10.80**

(51) Int. Cl.³: **B 23 B 5/00**
**B 24 B 5/36**

(30) Priorität: **11.10.79 CH 9177/79**
**25.01.80 DE 3002699**

(43) Veröffentlichungstag der Anmeldung:
**22.04.81 Patentblatt 81/16**

(84) Benannte Vertragsstaaten:
**AT BE CH DE FR GB IT LI LU NL SE**

(71) Anmelder: **Pilatus-Schweissmaterial AG**
**Schwarzenberg**

**CH-6103 Schwarzenberg(CH)**

(72) Erfinder: **Wyss, Kurt**
**Panoramastrasse**
**CH-6103 Schwarzenberg(CH)**

(74) Vertreter: **Blum, Rudolf Emil Ernst et al,**
**c/o E. BLUM & CO. Vorderberg 11**
**CH-8044 Zürich(CH)**

(54) **Einrichtung zum Abgleichen abgenützter Walzen von Feinwalzwerken der keramischen Industrie.**

(57) Ein ortsbewegliches Gerät (19) zum Abdrehen der Walzen (2,3) mittels eines Drehmeissels (25) wird neben der zu bearbeitenden Walze (2,3) angeordnet. Um das Bett (20) des Gerätes (19) mit den Walzenachsen genau auszurichten, sind an den Spannspindeln (17) Schraubenbolzen (29) angeschweisst. Diese Schraubenbolzen (29) durchdringen Platten (27), die mit dem Bett (20) fest verbunden sind. Damit kann das Bett (20) und somit der Verschiebeweg des Drehmeissels (25) relativ zur Walzenachse genau eingestellt werden. Weiter ist ein gesonderter Motor (31) vorhanden, der mittels eines Treibriemens (32) mit Zusatzriemenscheiben (33) verbunden ist, angeordnet, welche Zusatzriemenscheiben (33) mit der Abtriebswelle des Hauptmotors (11) fest verbunden sind. Beim Abdrehen der Walzen werden diese vom Motor (31) angetrieben, welcher Motor ein Getriebemotor ist, wobei der Motor (11), der zum üblichen Betrieb des Feinwalzwerkes verwendet wird, leer mitdreht.

Mittels dieses Gerätes (19) lassen sich nun die hohlgelaufenen Walzen (2,3) durch Trockendrehen abgleichen, welches schnell, einfach und rationell durchführbar ist. Das Feinwalzwerk muss während einer viel kürzeren Zeit zum Abgleichen der Walzen ausser Betrieb gesetzt werden.

Fig.1

Croydon Printing Company Ltd.

- 1 -

Einrichtung zum Abgleichen abgenützter Walzen
von Feinwalzwerken der keramischen Industrie
-----------------------------------------------

Die Erfindung betrifft eine Einrichtung zum Abgleichen abgenützter Walzen der Feinwalzwerke der keramischen
Industrie, welche Feinwalzwerke jeweils zwei Walzen aufweisen, die in einem von einem Grundrahmen getragenen Ständer
gelagert sind, welche Walzen mittels eines Riementriebes
mit dem Motor verbunden sind.

In der keramischen Industrie wird der Rohstoff in
mehreren Arbeitsgängen  zermahlen, so dass er gleichförmig
und kleinkörnig ist. Dieses Mahlen wird in mehreren aufeinanderfolgenden Arbeitsschritten und Vorrichtungen durchgeführt. Dabei wird üblicherweise das Mahlgut, in Durchlaufrichtung desselben gesehen, zuerst in einer einen Kollergang aufweisenden Vorrichtung gemahlen und der letzte Mahlvorgang mittels eines Feinwalzwerkes durchgeführt. Dieses
Feinwalzwerk weist zwei zusammenwirkende Walzen mit horizontal verlaufender Welle auf. Der Mantel dieser Walzen
wird durch das Mahlgut abgenützt. Ein Abnützen hat zur Folge, dass der Walzenspalt unregelmässig wird, derart, dass
zu grobe Körner, insbesondere Kalkkörner, im Rohstoff zur
Herstellung des Endproduktes auftreten. Diese beeinträchtigen unter anderem die Oberflächengüte des Erzeugnisses der-

AMS/bf
24.6.1980                                              EU 1058

art, dass ein Abblättern desselben auftritt. Beispielsweise wird in Ziegelwerken zur Herstellung von Dachziegeln und Mauerziegeln Ton zermahlen. Sind nun im Oberflächenbereich der Ziegel solche grobe Körner, insbesondere Kalkkörner vorhanden, blättern nicht nur Oberflächenbereiche der Ziegel ab, es tritt auch ein Abblättern des auf Mauerziegeln aufgebrachten Verputzes auf.

Beim Abnützen des Mantels der Walze tritt auch beispielsweise eine Erscheinung auf, die als Hohllaufen bezeichnet wird. Dieses bedeutet, dass der in Achsrichtung der Walze gesehene mittlere Abschnitt ihres Mantels stärker abgenützt wird, als die Randabschnitte desselben, derart, dass der Mantel, im Querschnitt gesehen, einen gegen die Walzenwelle hin eingebauchten Verlauf annimmt. Daraus folgt, dass hier der Walzenspalt insbesondere im mittleren Bereich des Mantels zu gross wird.

Folglich müssen diese Walzen der Feinwalzwerke immer wieder abgeglichen werden. Diese Arbeit wird nach dem Stand der Technik mittels eines periodischen Abschleifens des Mantels der Walzen durchgeführt. Dazu werden mit dem Grundrahmen des jeweiligen Feinwalzwerkes fest verbundene Schleifvorrichtungen verwendet. Ueblicherweise ist die Abnützung des Mantels der Walzen derart gross, dass jede Woche einmal geschliffen werden muss. Dieses Schleifen bedingt jedoch einen Ausfall des Feinwalzwerkes während etwa eines Arbeitstages, wobei es keine Ausnahme ist, dass das Schleifen 8 - 16 Stunden in Anspruch nimmt. Dies erhöht offensichtlich die Produktionskosten, dies verbunden mit einem Arbeitsausfall und einer Erzeugung einer beträchtlichen und schädlichen Menge Staub.

Hier will die Erfindung Abhilfe schaffen. Die Erfindung, wie sie in den Ansprüchen gekennzeichnet ist, löst die Aufgabe, eine Einrichtung zum Abgleichen abgenützter Walzen von Feinwalzwerken der keramischen Industrie zu schaffen, bei der ein Gerät zum Abdrehen der Walzen durch ein Trockendrehen mit dem jeweiligen Feinwalzwerk zur Verfügung steht, wobei ein Hilfsantrieb zum Einsatz während des Abdrehens zum Antrieb des Gerätes vorhanden ist.

Die durch die Erfindung erreichten Vorteile sind im wesentlichen darin zu sehen, dass das Abgleichen in einer beträchtlich kürzeren Zeitdauer als bisher durchführbar ist. Dabei ist eine sehr hohe Massgenauigkeit erzielbar. Durch die Verwendung eines Hilfsantriebes ergeben sich erhebliche Einsparnisse in bezug auf den Energiebedarf, und die Walzen können mit einer, für diese Bearbeitung zweckmässigen Drehgeschwindigkeit getrieben werden.

Im folgenden wird die Erfindung anhand von zwei Ausführungswegen darstellenden Zeichnungen näher erläutert. Es zeigen:

Fig. 1 eine Seitenansicht eines Feinwalzwerkes mit einer Einrichtung zum Abgleichen der hohlgelaufenen Walzen,

Fig. 2 eine Vorderansicht des in der Fig. 1 gezeigten Feinwalzwerkes,

Fig. 3 eine schaubildliche Ansicht eines ortsbeweglichen Gerätes zum Abdrehen der Walzen,

Fig. 4 eine Einzelheit der Fig. 1,

Fig. 5 eine der Fig. 4 entsprechende Ansicht eines weiteren Ausführungsbeispiels,

Fig. 6 eine der Fig. 3 entsprechende Ansicht des weiteren Ausführungsbeispiels,

Fig. 7 einen verstellbaren Tragrahmen des weiteren Ausführungsbeispiels, und

Fig. 8 einen Schnitt durch den linken Teil der Fig. 7.

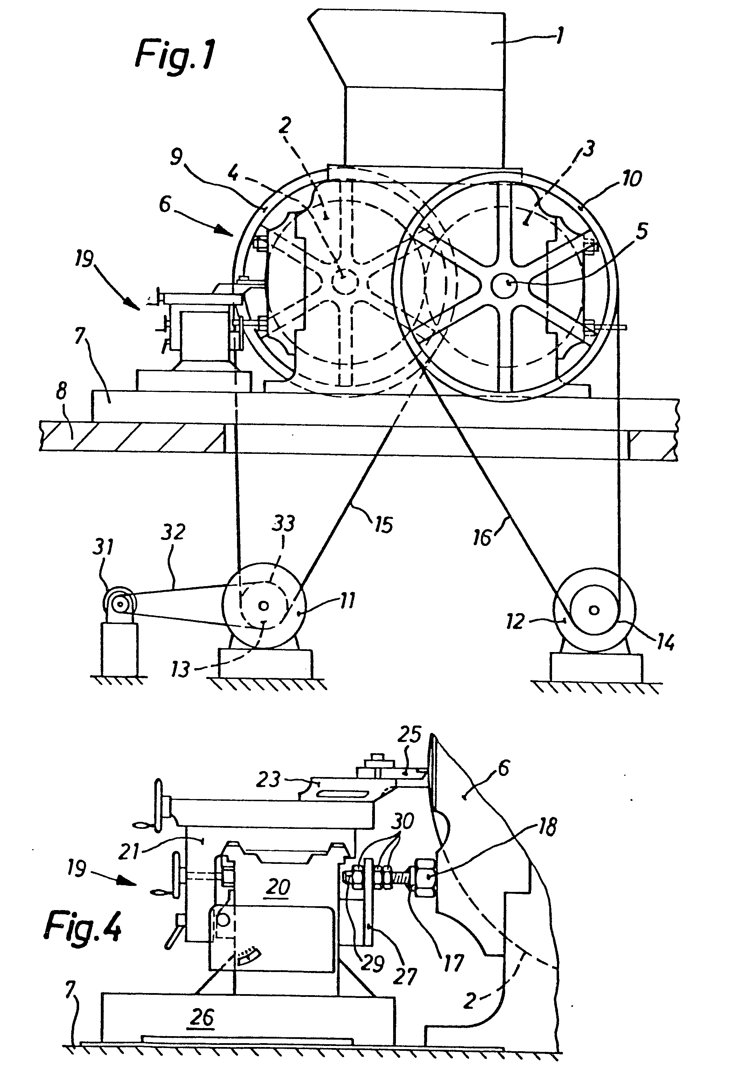

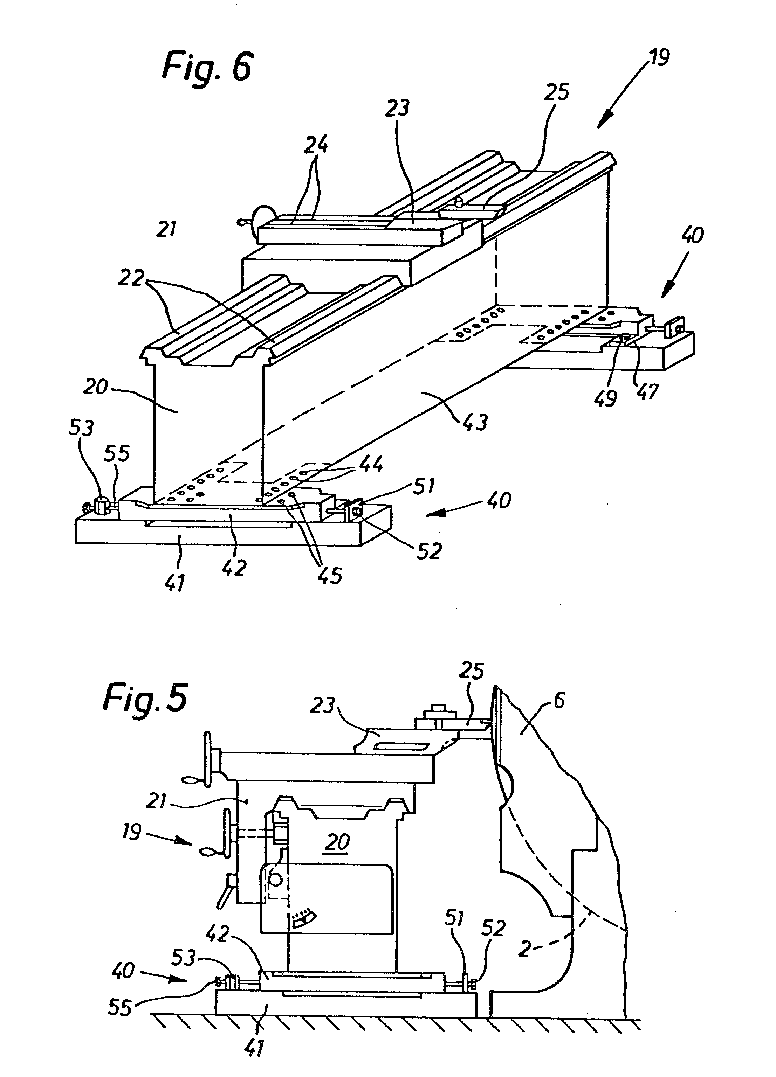

Das in der Fig. 1 gezeigte Feinwalzwerk enthält einen Einfülltrichter 1, durch welchen das zu verarbeitende Gut den Walzen 2,3 zugeführt wird. Die Wellen 4,5 der Walzen 2,3 sind in einem Ständer gelagert, der allgemein mit der Bezugsziffer 6 bezeichnet ist. Dieser Ständer 6 ist von einem Grundrahmen 7 aus Profilstangen getragen, welcher seinerseits auf dem Werkhallenboden 8 abgestützt ist. Der Walze 2 ist eine Riemenscheibe 9 und der Walze 3 eine Riemenscheibe 10 zu deren Antrieb zugeordnet. Weiter ist ein Motor 11 bzw. 12 vorhanden, dessen Abtriebswellen mit Riemenscheiben 13 bzw. 14 versehen sind, welche mittels Keilriemen 15,16 mit den Riemenscheiben 9,10 antriebsverbunden sind. Weiter sind die Spannspindeln 17 mittels der dazugehörigen Muttern 18 gezeigt, (siehe auch Fig. 4), mittels welchen die Abmessung des Walzenspaltes verändert werden kann.

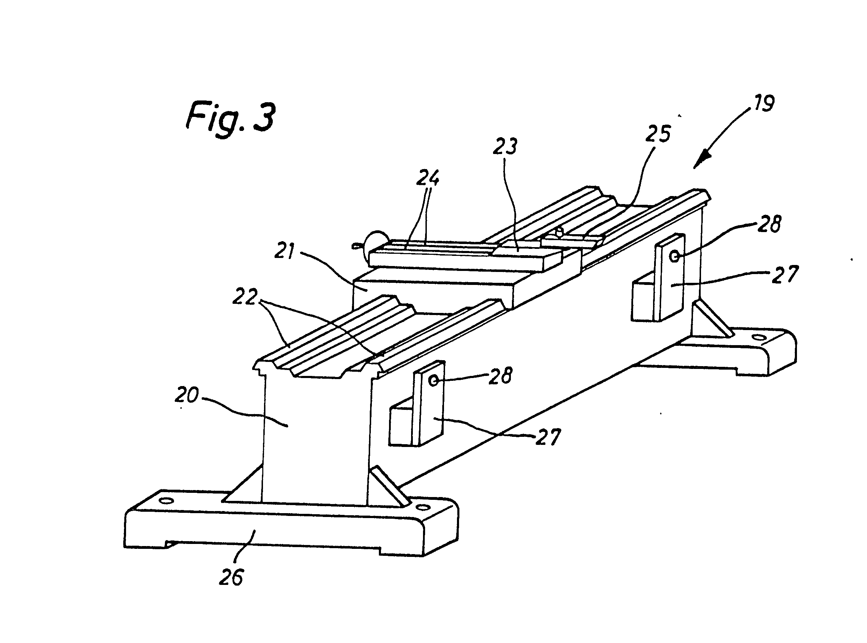

Auf dem Grundrahmen 7 des Feinwalzwerkes ist nun ein Gerät zum Abdrehen der Walzen angeordnet, welches Gerät allgemein mit der Bezugsziffer 19 bezeichnet ist. Siehe hierzu auch ein erstes Ausführungsbeispiel, gezeigt in den Fig. 3 und 4. Dieses Gerät weist ein Bett 20 auf, auf welchem Bett ein Längsschlitten 21 angeordnet ist, der entlang Führungen 22 verschiebbar ist und weist einen Querschlitten 23 auf, der als Drehmeisselträger ausgebildet ist, wobei der Drehmeissel 25 mit der jeweiligen Walzenachse ausgerichtet ist. Das Bett 20 ist im ersten Ausführungsbeispiel von Traggliedern 26 getragen, mittels welchen das Gerät zum Abdrehen der Walzen an der Stelle mit dem Grundrahmen 7 des Feinwalzwerkes verbunden ist, bei welcher bis anhin die Schleifvorrichtungen mit dem Grundrahmen verbunden gewesen sind.

Mit dem Bett 20 sind zwei Platten 27 (siehe Fig. 3 und 4) verbunden, welche Platten 27 Löcher 28 aufweisen.

Mit den (unteren) Spannspindeln 17 ist jeweils ein gleichachsig verlaufender Schraubenbolzen 29 verschweisst. Die Platten 27 des Bettes 20 sind mittels Muttern 30 mit dem jeweiligen Schraubenbolzen 29 verbunden, derart, dass die Platten 29 entlang der Schraubenbolzen 29 verschiebbar sind und somit das Bett 20 und insbesondere die Führungen 22 mit der Achsrichtung der Walzen 2,3 genau ausrichtbar sind.

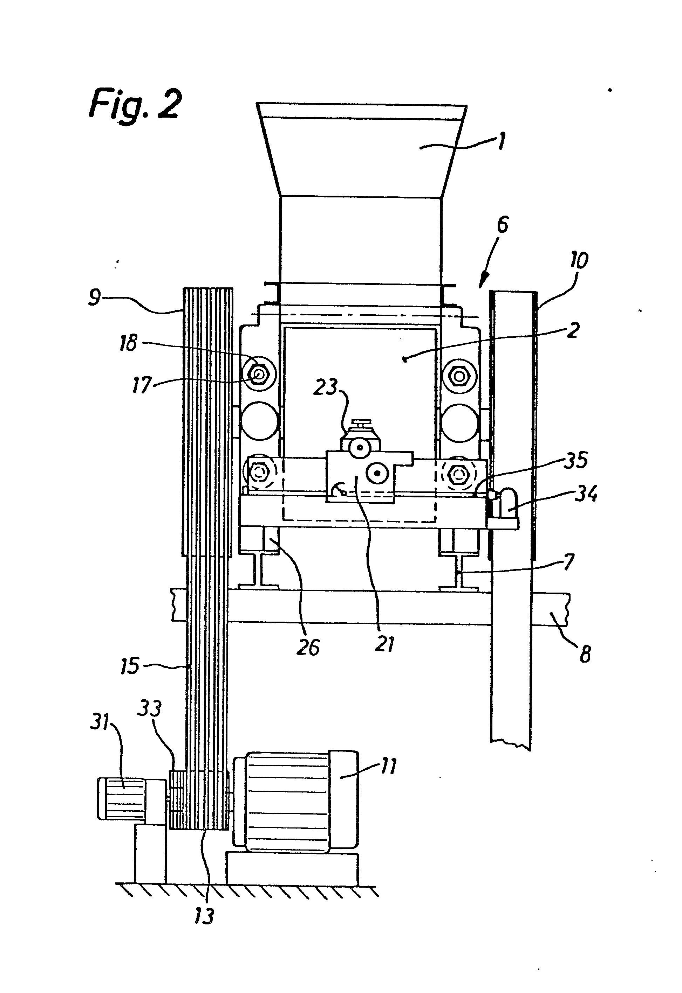

Es wird nun wieder auf die Fig. 1 und 2 verwiesen. Neben dem Motor 11 (und offensichtlich neben dem Motor 12) ist ein weiterer Motor 31 angeordnet, der mittels eines Treibriemens bzw. einer Kette 32 mit Zusatzriemenscheiben bzw. Kettenzahnrädern 33 verbunden ist, welche Zusatzriemenscheiben bzw. Kettenzahnräder mit den Riemenscheiben 13 einstückig ausgebildet bzw. fest verbunden sind. Dabei ist der Motor 31 als Reduktionsmotor ausgebildet, dessen Leistung ein Bruchteil der Leistung des Hauptmotors 11 bzw. 12 ist. Während des üblichen Betriebes des Feinwalzwerkes, bei welchem die Walzen 2,3 vom Motor 11 bzw. 12 getrieben werden, sind die Treibriemen bzw. Kette 32 des kleineren Motors 31 nicht im Eingriff mit den Zusatzriemenscheiben bzw. Kettenzahnrädern 33.

Muss nun beispielsweise die Walze 2 abgeglichen werden, d.h. ihr unregelmässig abgenützter, z.B. hohlgelaufener Mantel wieder auf eine genaue zylindrische Form zurückgeführt werden, wird das Gerät 19 zum Abdrehen der Walzen auf den Grundrahmen 7 aufgesetzt und damit verschraubt. Wie dies dem Fachmann bekannt ist, sind dazu keine weiteren Aufwendungen notwendig, da dieses Gerät 19 zum Abdrehen der Walzen die bekannten Walzenschleifenvorrichtungen, welche bis anhin gemäss des Standes der Technik verwendet wurden, ersetzt. Dementsprechend sind die notwendigen Ausbildungen im Grundrahmen und Verbindungsvorrichtungen, mittels welchen die Tragglieder 26 des Gerätes 19 mit dem Grundrahmen 7 zu verbinden sind, schon vorhanden. Dabei wird das Gerät 19 derart aufgesetzt, dass die Schraubenbolzen 29 durch die Löcher 28 der Platten 27 hindurchdringen. Durch entsprechendes Schrauben der Muttern 30 und der Verwendung entsprechender Tastvorrichtungen, die auf dem Gerät 19 angeordnet sind, wird dieses nun derart ausgerichtet, dass die Längsführungen 22 genau parallel zur Walzenachse verlaufen, d.h. dass der Längsschlitten 21 genau parallel zur Walzenachse verschiebbar ist. Danach wird mittels Messinstrumenten, beispielsweise Tastuhren, der genaue Verlauf der Verformung des Mantels der Walze festgestellt, so dass ermittelt werden kann, wieviel Material davon abgetragen werden muss. Entsprechend wird der Drehmeissel 25 auf dem Querschlitten 23 angeordnet. Somit ist das Gerät 19 zum Einsatz bereit, wozu der Vollständigkeit halber zu erwähnen ist, dass der Längsschlitten mittels eines Motors 34 und einer Spindelanordnung 35 verschiebbar ist.

Darauf wird der Treibriemen bzw. die Kette 32 in Eingriff mit den Zusatzriemenscheiben bzw. Kettenzahnrädern 33 gebracht. Danach wird der Motor 31 in Betrieb gesetzt und treibt über die Riemenscheiben bzw. Kettenzahnräder 13 des leer mitlaufenden Motors 11 die Riemenscheibe 9 der Walze 2 an, derart, dass nun ihr Mantel abgedreht werden kann. Der Vollständigkeit halber soll noch bemerkt werden, dass mittels des Drehmeissels 25 auch die Flanken der jeweiligen Walze bearbeitet bzw. abgedreht werden können.

Das Abdrehen des Mantels der Walze 2 erfolgt im sogenannten Trockendrehen, ohne Verwendung von Kühlflüssigkeit. Beim Trockendrehen darf bekanntlich mit höherer Drehzahl und grösserem Vorschub gearbeitet werden. Für dieses Trockendrehen muss jedoch die Umfangsgeschwindigkeit der Walze relativ klein sein. Bekanntlich drehen die Walzen eines Feinwalzwerkes im üblichen Betrieb mit einer Geschwindigkeit von etwa 200 U.p.m. Dieses würde bei dem Walzendurchmesser von 1 m eine viel zu hohe Umfangsgeschwindigkeit zum Trockendrehen zur Folge haben. Deshalb wird mit dem kleineren Reduktionsmotor 31 gearbeitet, der nur noch eine Drehzahl von 8 bis 30 U.p.m. der Walze 2 bewirkt. Weiter ist noch zu bemerken, dass ein Antreiben der jeweiligen Walze mittels des Hauptmotors 11, der für eine relativ hohe Leistung ausgelegt ist, sehr unwirtschaftlich ist, derart, dass die zusätzlichen Kapitalaufwendungen des kleineren Motors 31, einschliesslich des dazugehörigen Riemen- oder Kettentriebes viel wirtschaftlicher ist. Der Hauptmotor 11 weist üblicherweise eine Leistung von ungefähr 100 PS (75 kW) auf, der Hilfsmotor eine die kleiner als 3 PS (2,2 kW) ist. Nach dem Beenden des Abdrehens des Mantels der Walze 2 wird der Treibriemen bzw. die Kette 32 des Motors 31 von den Zusatzriemenscheiben bzw. das Zahnrad, losgekoppelt. Dazu ist der Hilfsmotor 31 beispielsweise auf einer Wippe angeordnet. Danach wird das gesamte Gerät 19 von der in der Fig. 1 gezeigten Stelle entfernt und entsprechend neben der Walze 3 angeordnet, so dass nachfolgend diese Walze, wie vorgehend beschrieben, abgeglichen werden kann.

In den Fig. 5 bis 8 ist ein weiteres Ausführungsbeispiel gezeigt, in welchen Fig. 5 bis 8 die dem ersten Ausführungsbeispiel gleichen Bauteile mit denselben Bezugsziffern bezeichnet sind.

Hier ist das Bett 20 bei beiden Enden auf einer Tragrahmenanordnung 40 abgestützt, wie in Fig. 5 und insbesondere in Fig. 6 dargestellt ist. Jede Tragrahmenanordnung weist zwei Hauptteile, nämlich einen Grundteil 41 und einen Schlitten 42 auf.

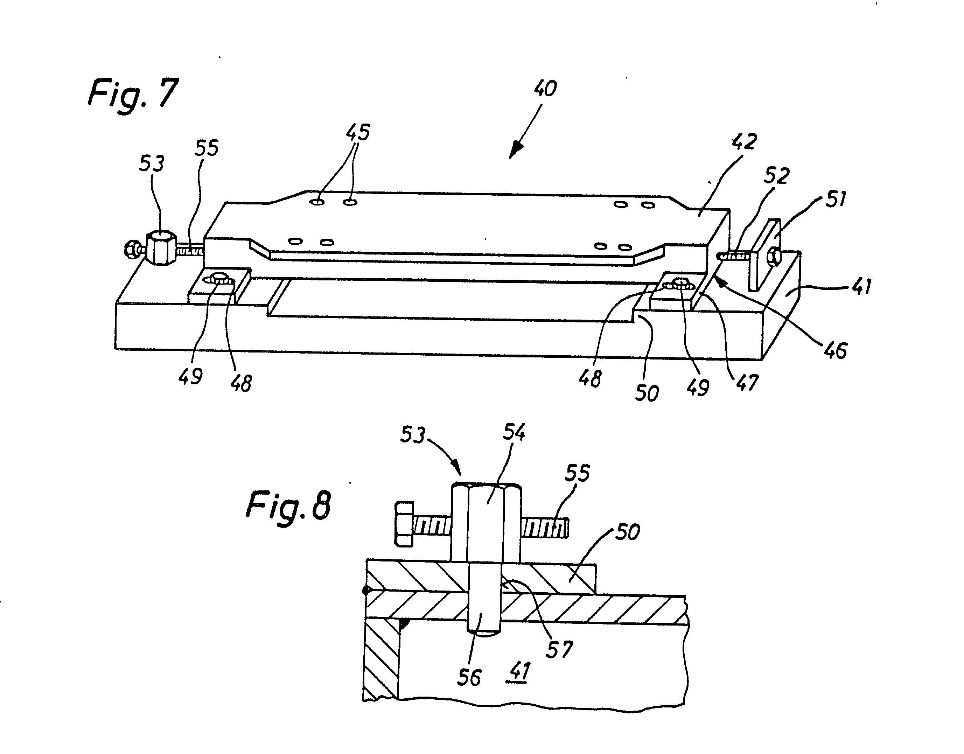

In der Bodenplatte 43 des Bettes 20 sind zwei Gruppen von jeweils sechs Löchern 44 zur Aufnahme (nicht gezeigter) Bolzen ausgebildet, wobei die Reihe der Löcher 44 jeder Gruppe parallel zu den Walzenachsen verläuft. Im Schlittenteil 42 sind entsprechende Löcher 45 (siehe insbesondere Fig. 7) in Gruppen von je zwei Löchern 45 ausgebildet. Aufgrund der Ausbildung der Löcher 44 ist das Bett 20 parallel zu den Walzenachsen verschiebbar in mehreren Stellungen mit dem Schlittenteil 42 durch (nicht gezeigte) Bolzen verbindbar, bzw. verbunden.

Das mit dem Schlittenteil 42 fest verbundene, z.B. verschraubte Bett 20 ist auf dem Grundteil quer zu den Walzenachsen verschiebbar.

Dazu ist der Schlittenteil 42 auf dem Grundteil 41 gleitend verschiebbar angeordnet. Der Schlittenteil 42 weist bei beiden Enden einen plan geschliffenen Flächenabschnitt 46 auf, der teilweise bei einer Platte 47 fortgesetzt ist, welche Platte 47 vom Schlittenteil 42 absteht und damit verschweisst ist. Die Platte 47 ist von einem Langloch 48 durchsetzt. Mittels jeweils eines das Langloch durchdringenden Schraubenbolzens 49 ist die Platte 47 und somit der Schlittenteil 42 mit dem Grundteil 41 fest verbunden. Der Vollständigkeit halber muss noch bemerkt werden, dass auf den Grundteil 41 ebenfalls eine plan geschliffene Platte 50 (siehe Fig. 8) aufgeschweisst ist.

Der Grundteil 41 ist analog zum ersten Ausführungsbeispiel mit dem Grundrahmen 7 des Feinwalzwerkes fest verbunden, z.B. verschraubt. Auf mindestens einem der zwei jeweils vorhandenen Grundrahmen 41 ist bei dem den Walzen 2, 3 näher gelegenen Ende eine aufrecht stehende Platte 51 aufgeschweisst. Diese Platte 51 ist von einem einen Anschlag bildenden Schraubenbolzen 52 durchsetzt. Dieser Schraubenbolzen 52 ist mittels (nicht gezeigten) Gegenmuttern mit der Platte 51 arretiert.

Beim entgegengesetzten Ende weist mindestens ein Grundrahmen 41 einen Zapfen 53 auf. Der Kopf 54 des Zapfens 53 ist in Form einer Sechskantmutter ausgebildet. Dieser Kopf 54 ist von einer weiteren Stellschraube 55 durchsetzt. Der Zapfen 53 weist einen Schaft 53 mit kreisrunder Querschnittsform auf, mittels welchem der Zapfen 53 in ein Loch 57 im Grundteil 41 eingesteckt, also damit lösbar verbunden ist. Der Zweck dieser Anordnung ist, dass der Zapfen 53 mit der Stellschraube 55 jeweils dann einfach entfernt werden kann, wenn das ein beträchtliches Gewicht aufweisende Gerät 19, bzw. Bett 20 mittels z.B. eines Gabelstaplers neben dem Walzwerk in Stellung gebracht, bzw. davon entfernt wird. Somit ist es nicht möglich, dass Zapfen 53 und Stellschraube 55 beschädigt werden.

Durch Betätigen der Stellschraube 55 lässt sich nun das Bett 20 in einer quer zu den Walzenachsen verlaufenden Richtung fein verschieben, währenddem die Löcher 45 im Schlittenteil 42 eine Grobeinstellung des Bettes 20 quer zur Wagenachse ermöglichen.

Beim Anordnen des Gerätes 19 bzw. des Bettes 20 neben dem Feinwalzwerk wird dieses also zuerst durch geeignete Auswahl der Löcher 44,45 grob dazu ausgerichtet und dann erfolgt die Feinausrichtung durch ein Verschieben mittels der Schraubenbolzen 55 bis zum Anschlag an den Schraubenbolzen 52. Darauf werden die Platten 47 des Schlittenteiles 42 mittels der die Langlöcher 48 durchsetzenden Schraubenbolzen 49 mit dem Grundteil 41 fest verschraubt.

Das Bearbeiten der Walzen kann darauf entsprechend der beim ersten Ausführungsbeispiel gemachten Erläuterung erfolgen. Das Abdrehen der Walzen lässt sich in einer viel kürzeren Zeitspanne, ungefähr einer Stunde durchführen, dies im Vergleich mit dem bekannten Schleifen, bei welchem man zeitweise mehrere Tage lang abschleifen muss, wobei zusätzlich zu bemerken ist, dass beim Schleifen der Hauptantriebmotor 11 verwendet wird, welches nicht wirtschaftlich ist. Schliesslich ist noch festzustellen, dass die durch ein Abdrehen erhältliche Oberflächengüte des Walzenmantels erheblich besser ist als die mittels eines Abschleifens erhältliche Oberflächengüte.

Patentansprüche

1. Einrichtung zum Abgleichen abgenützter Walzen der Feinwalzwerke der keramischen Industrie, welche Feinwalzwerke jeweils zwei Walzen (2,3) aufweisen, die in einem von einem Grundrahmen (7) getragenen Ständer (6) gelagert sind, welche Walzen (2,3) mittels eines Riementriebes (9, 13,15:10,14,16) mit einem Motor verbunden sind, gekennzeichnet durch ein Gerät (19) zum Abdrehen der Walzen (2,3), mit einem mit dem Grundrahmen (7) des jeweiligen Feinwalzwerkes verbindbaren Bett (20), welches einen längs und quer zu den jeweiligen Walzenachsen verschiebbaren Drehmeisselhalter (23) trägt, und durch einen Hilfsantrieb (31-33) einschliesslich eines motorgetriebenen Riemen- oder Kettentriebes, welcher mit dem Riementrieb (9,13,15:10,14,16) des Feinwalzwerkes koppelbar ist.

2. Einrichtung nach Anspruch 1, gekennzeichnet durch eine mit der Abtriebswelle des Motors (11,12) des Feinwalzwerkes fest verbundene Zusatzriemenscheiben- bzw. Kettenzahnradanordnung (33), die zur Aufnahme der Riemen bzw. Kette (32) des Hilfsantriebes bestimmt ist.

3. Einrichtung nach Anspruch 1, dadurch gekennzeichnet, dass der Hilfsantrieb einen Getriebemotor mit Reduktionsgetriebe aufweist.

4. Einrichtung nach Anspruch 1, dadurch gekennzeichnet, dass das Bett eine Längsführung (22) zur Aufnahme eines Längsschlittens (21) aufweist, der seinerseits eine Querführung (24) für einen den Drehmeisselhalter tragenden Querschlitten (2) aufweist, wobei der Längsschlitten (21) motorgetrieben verschiebbar ist.

5. Einrichtung nach Anspruch 4, wobei jede Walze in einem Ständerteil (6) gelagert ist und der Walzenspalt mittels die Ständerteile (6) miteinander verbindenden Spannspindeln (17) verstellbar ist, gekennzeichnet durch jeweils einen mit den Spannspindeln (17) verschweissten und dazu gleichachsig verlaufenden Schraubenbolzen (24) und durch zwei mit dem Bett (20) fest verbundene zur Aufnahme des jeweiligen Schraubenbolzens (29) bestimmte Platten (27), welche Platten mittels auf den Schraubenbolzen (29) angeordneten Muttern (30) in axialer Richtung desselben verschiebbar sind, um damit das Bett (20) und folglich die Längsführung (22) mit der Achsrichtung der Walzen (33) auszurichten.

6. Einrichtung nach Anspruch 1, dadurch gekennzeichnet, dass das Bett (20) bei beiden Enden auf jeweils einer Tragrahmenanordnung (40) abgestützt ist, welche Tragrahmenanordnungen (40) mit dem Grundrahmen (7) verbunden sind und jeweils einen mit dem Grundrahmen (7) fest verbundenen Grundteil (41) und einen darauf quer zu den Walzenachsen verschiebbaren Schlittenteil (42) aufweisen.

7. Einrichtung nach Anspruch 6, dadurch gekennzeichnet, dass das Bett (20) parallel zu den Walzenachsen gruppenweise angeordnete Löcher (44) zur Aufnahme von, das Bett (20) mit dem Schlittenteil (42) verbindenden Bolzen aufweist, derart, dass das Bett (20) in parallel zu den Walzenachsen ausgerichteten Stellungen mit dem Schlittenteil (42) verbindbar ist.

8. Einrichtung nach Anspruch 6, dadurch gekennzeichnet, dass der Schlitten (42) mittels auf den Grundteil (41) angeordneten Stellschrauben (52,55) quer zu den Walzenachsen verschiebbar ist, wobei mindestens eine Stellschraube (55) einen mit dem Grundteil (41) lösbar verbundenen Träger (53) durchsetzt.

9. Einrichtung nach Anspruch 8, dadurch gekennzeichnet, dass der Träger ein einen Kopf (54) und Schaft aufweisender Zapfen (53) ist, welcher Kopf (54) ein Innengewinde zur Aufnahme der Stellschraube (55) aufweist und welcher Schaft (56) in ein im Grundteil (41) ausgebildetes Loch (57) eingesteckt ist.

0027245

Fig.1

Fig.4

**Fig. 2**

Fig. 3

0027245

0027245

**Fig. 6**

**Fig. 5**

Fig. 7

Fig. 8

0027245

0027245

# EUROPÄISCHER RECHERCHENBERICHT

Europäisches Patentamt

Nummer der Anmeldung

EP 80 10 6076

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - C - 560 078 (KRUPP) | 1 |
| A | US - A - 3 889 424 (BUHAYAR) | 1 |
| A | US - A - 2 674 835 (SENFT) | 1 |
| | ---- | |

**KLASSIFIKATION DER ANMELDUNG (Int. Cl.³)**

B 23 B 5/00
5/36

**RECHERCHIERTE SACHGEBIETE (Int. Cl.³)**

B 23 B 5/00
B 28 D 3/00
B 24 B 5/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-01-1981 | BOGAERT |

EPA form 1503.1 06.78